# EUROPEAN PATENT APPLICATION

(11) **EP 0 975 131 A2**
(43) Date of publication of application: **26.01.2000**
(21) Application number: 99202411.7
(22) Date of filing: 22.07.1999
(51) Int. Cl.: H04M 1/02

(54) **Portable and foldable telephone apparatus with improved hinge mechanism**

(30) Priority: 24.07.1998 IT MI980513 U
(71) Applicant: Telital S.p.A., 34010 Sgonico (Trieste) (IT)
(72) Inventor: Vovk, Rodolfo, 34074 Monfalcone (Gorizia) (IT)
(74) Representative: Faraggiana, Vittorio, Dr. Ing.

(57) **Abstract**

A portable send and receive set such as a cellular telephone comprises a main body (11) and a door member (12) hinged to the main body to be movable between a closed position and an open position. The apparatus comprises a pushbutton (19) with a first position of stand-by or released and a second position of stop in which it is fully pressed and a third position intermediate between the first and second positions. In the intermediate position the pushbutton commands generation of a control signal for the apparatus functions and in the stop position enables opening of the door.

## Description

The present invention relates to a portable send and receive set, e.g. a cellular telephone, equipped with an innovative enablement mechanism.

The general purpose of the present invention is to make available an apparatus with a practical and reliable mechanism.

In view of this purpose it is sought to provide in accordance with the present invention a portable send and receive set comprising a main body and a door member hinged to the main body to be movable between a closed and an open position characterized in that it comprises a pushbutton with a first stand-by or released position and second a stop position in which it is fully pressed and a third position intermediate between the first and second positions with the intermediate position of the pushbutton controlling generation of a control signal for operation of the apparatus and in the stop position enabling opening of the door.

To clarify the explanation of the innovative principles of the present invention and its advantages compared with the prior art there is described below with the aid of the annexed drawings a possible embodiment thereof by way of non-limiting example applying said principles. In the drawings:
- Fig. 1 shows a diagrammatic transparent view of a send and receive set with the mechanism in accordance with the present invention,
- Fig. 2 shows a partial diagrammatic cross-section view of the apparatus of Fig. 1, and
- Fig. 3 shows a control sequence of the mechanism in accordance with the present invention.

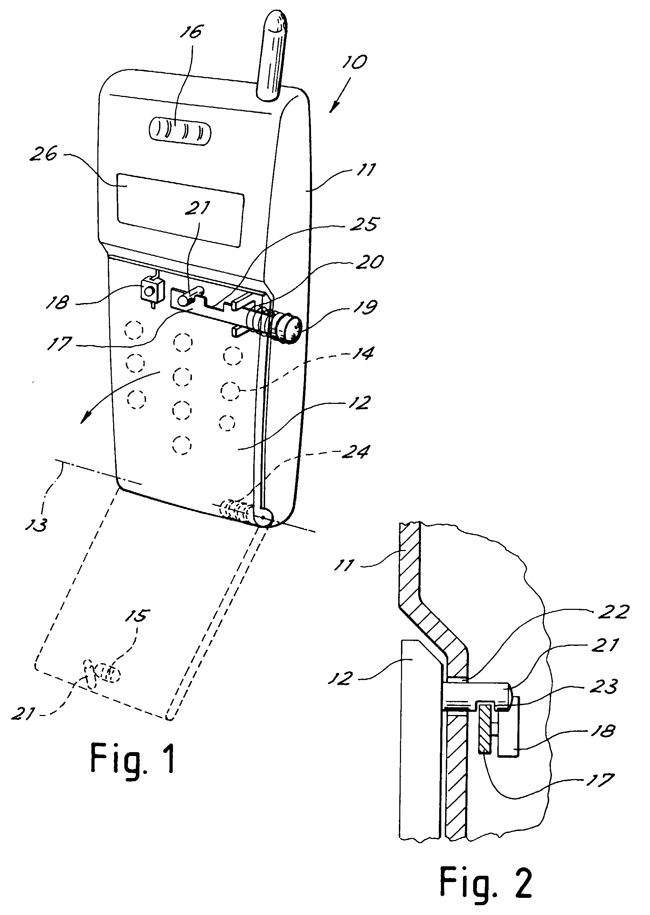

With reference to the figures, Fig. 1 shows a portable send and receive set e.g. a cellular telephone indicated as a whole by reference number 10 comprising a body 11 and an openable door or 'flip' 12 hinged below to the body along a transversal axis 13. The door covers the keypad and the selection controls 14 of the apparatus and must be opened downward during use as shown diagrammatically in broken lines in Fig. 1. The door comprises on its internal surface a microphone 15 while a loudspeaker 16 is located in the body 11. The apparatus can comprise a display 26.

A generally known apparatus is described above.

In accordance with the present invention the apparatus comprises internally an enablement mechanism comprising in turn a sliding bar 17 and a pushbutton microswitch 18. The microswitch 18 emits an electrical control signal and lies along the path of travel of the bar 17 slightly backed to be operated upon sliding of the bar following pressure on a pushbutton 19 constituting an extension of the bar outside the apparatus. Advantageously the pushbutton 19 lies on a side wall of the apparatus and the bar consequently has a movement transversal to the vertical extension of the apparatus. In stand-by position the pushbutton 19 is pushed towards the exterior of the apparatus by a spring 20.

As may also be seen in Fig. 2 the door 12 has a pin or hook 21 projecting towards the apparatus to enter a corresponding hole 22 in the body of the apparatus. The pin has a notch 23 for engaging with the bar 17 and holding the door in closed position against the action of opening springs 24 located in the door hinge.

The bar has a release notch 25 allowing release of the pin when the bar is made to slide a sufficient distance.

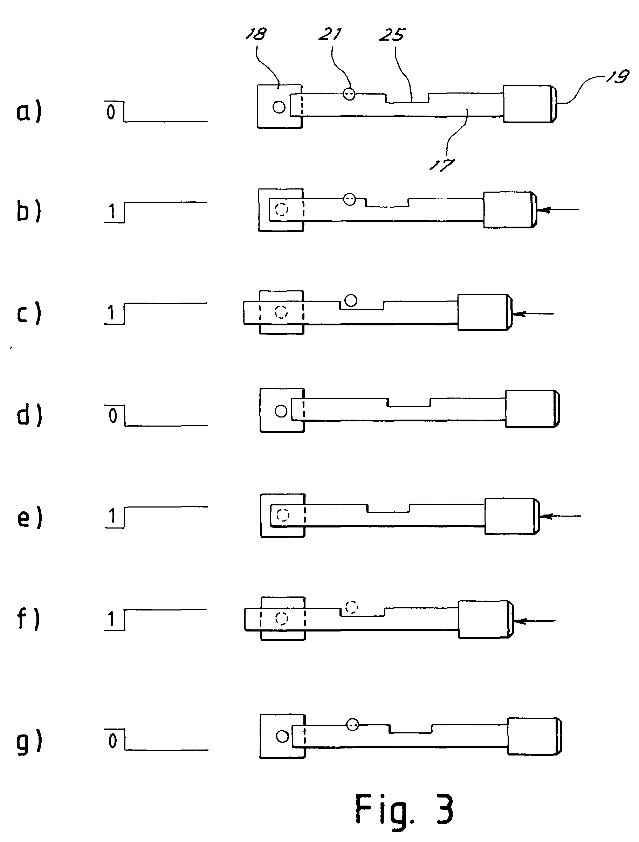

Figs. 3a to 3g show operational sequences of the enablement mechanism. Fig. 3a shows the normal stand-by condition with closed door, pin hooked to the bar and switch 18 not operated. The control signal given by the pushbutton is on zero. Upon pressure of the key 19 to an intermediate travel position (Fig. 3b) the front end of the bar operates the switch 18 to actuate the control signal which moves to 1. Shifting of the control signal from 0 to 1 commands passage of the apparatus from standby condition to a first active condition. The pin is still hooked and the door closed.

Upon pressing the pushbutton 19 to the stop (Fig. 3c) the switch remains pressed and the pin 21 is released so that the door 12 opens to uncover the keypad and microphone.

The apparatus is actuated and ready for communication. The pushbutton 19 can be released (Fig. 3d) and the apparatus remains in enabled condition.

Upon termination of the desired operation (answering a call, sending a call, data input with the keypad etc) the key 19 can be pressed (Fig. 3e) to again operate the switch 18 so as to emit a new control signal to command e.g. the end of a conversation and disconnection from the line. Continuing with movement of the pushbutton 19 the slot 25 is moved opposite the hole 22 and the door can be closed (Fig. 3f). Upon release of the pushbutton 19 (Fig. 3g) the control signal returns to zero and the door remains hooked.

The apparatus returns to the initial stand-by condition ready for a new operation.

At this point it is clear that the preset purposes have been achieved.

With only one key 19 it is possible to command both electrical and mechanical functions of the apparatus. The control signal emitted by the pushbutton 18 can be used in various ways depending on specific requirements. This control signal can also be interpreted differently by the apparatus depending on its specific condition when the signal is generated.

It has been found advantageous that upon opening there be a first electrical action (pushbutton at half travel) during which there is enablement to answer an incoming call or enablement for sending a call, illumination of the keypad and display and enablement for operation with the accessorial functions and a second mechanical action (pushbutton at stop) commanding spring opening of the door. Upon closing it is possible to have a first electrical action (pushbutton at half travel) during which there is closing of the telephone link, switching off of keypad and display illumination, enablement for call reception and locking against operation with the accessorial functions and a second mechanical action (pushbutton at stop) for enablement of mechanical retention of the door.

Naturally the above description of an embodiment applying the innovative principles of the present invention is given by way of non-limiting example of said principles within the scope of the exclusive right claimed here. For example the form and arrangement of the various members in the apparatus and in the enablement mechanism can vary depending on specific practical exigencies.

## Claims

1. A portable send and receive set comprising a main body (11) and a door member (12) hinged to the main body to be movable between a closed and an open positions characterized in that it comprises a pushbutton (19) with a first position of stand-by or release and a second position of stop in which it is fully pressed and a third position intermediate between the first and second positions with the pushbutton in the intermediate position commanding generation of a control signal for the apparatus functions and in the stop position enabling opening of the door.

2. Apparatus in accordance with claim 1 characterized in that the control signal is also generated in the second position and in the movement between the second and third positions.

3. Apparatus in accordance with claim 1 characterized in that during movement towards the second or door opening position enablement the control signal commands functions comprising a choice between enablement of an arriving call answering or sending of a call or illumination of the apparatus keypad and display and enablement of operation with accessorial functions of the apparatus.

4. Apparatus in accordance with claim 1 characterized in that the stop position is also the door closing enablement position.

5. Apparatus in accordance with claim 1 characterized in that in the movement towards the closing enablement position the control signal generated by passing through the intermediate position commands functions comprising the choice between closing of a telephone link, keypad and display illumination extinction, enablement of call reception or interdiction of operation with the accessorial functions.

6. Apparatus in accordance with claim 1 characterized in that the pushbutton (19) is integral with a bar (17) inside the apparatus to control its axial sliding and with the door (12) having a pin (21) for holding in closed position against the action of spring means (24) with the pin (21) hooking an edge of the bar (17) and the bar having a pin release notch (25) which moves opposite the pin to release it from the bar upon the thrust of the pushbutton (19) towards the stop position with a switch (18) for generation of said control signal being arranged in the path of the bar (17) to be operated by movement of the bar between a stop and an intermediate positions.
